# DEMANDE DE BREVET EUROPEEN

(11) **EP 3 581 444 A1**
(43) Date de publication de la demande: **18.12.2019**
(21) Numéro de dépôt: 19179262.1
(22) Date de dépôt: 10.06.2019
(51) Int. Cl.: B60S 1/52, B60S 1/54, B60S 1/04, B60S 1/48

(54) **PROCÉDÉ DE RÉDUCTION DE LA QUANTITÉ DE LIQUIDE ASPIRÉ PAR UN BALAI D'ESSUYAGE ET SYSTÈME D'ESSUYAGE METTANT EN OEUVRE UN TEL PROCÉDÉ**

(30) Priorité: 13.06.2018 FR 1855189
(71) Demandeur: Valeo Systèmes d'Essuyage, 78322 Le Mesnil Saint Denis (FR)
(72) Inventeur: CAILLOT, Gérald, 78322 LE MESNIL SAINT DENIS (FR); IZABEL, Vincent, 78322 LE MESNIL SAINT DENIS (FR); JARASSON, Jean-Michel, 78322 LE MESNIL SAINT DENIS (FR)
(74) Mandataire: Valeo Systèmes d'Essuyage

(57) **Abrégé**

L'invention concerne un procédé de réduction du phénomène d'aspiration d'eau sur une surface vitrée dans le sillage d'un balai d'essuyage lorsqu'il change de direction au niveau de sa position le long du montant. À cet effet, le procédé comprend une étape de soufflage d'un flux d'air sur la surface vitrée, successivement à une étape de projection d'un liquide sur ladite surface vitrée, ledit flux d'air et ledit liquide circulant dans un balai d'essuyage (1) à l'intérieur d'un même canal et étant expulsé par des mêmes ouvertures dudit canal.

L'invention porte aussi sur un système d'essuyage (3) comprenant un tel balai d'essuyage (1) configuré pour mettre en oeuvre un tel procédé.

## Description

### Domaine technique

Le contexte technique de la présente invention est celui de l'évacuation de l'eau hors d'une surface à essuyer d'un véhicule, et notamment la réduction d'un effet d'aspiration de l'eau dans le sillage d'un balai d'essuyage de véhicule automobile. Plus particulièrement, l'invention a trait à un procédé de réduction de la quantité de liquide aspiré par un balai d'essuyage et à un système d'essuyage mettant en oeuvre un tel procédé.

### État de la technique antérieure

On connait des véhicules automobiles équipés d'un système d'essuyage comprenant au moins un balai d'essuyage d'une surface vitrée, telle que par exemple un pare-brise.

Le balai d'essuyage est entraîné en rotation sur la surface vitrée par l'intermédiaire d'un bras d'entrainement mis en mouvement par un moteur d'entraînement le long d'une épure de balayage. L'épure de balayage est définie notamment par deux positions limites du balai d'essuyage sur la surface vitrée :
- une position initiale dite "arrêt fixe", correspondant à une position de repos du balai d'essuyage. Selon le véhicule, celle-ci peut être le long du capot, c'est à dire dans une position sensiblement horizontale par rapport à la surface vitrée, ou bien le long d'un montant latéral, c'est à dire dans une position sensiblement verticale par rapport à la surface vitrée ; et
- une position finale dite « opposée arrêt fixe », correspondant à une position active dans laquelle le balai d'essuyage change de sens de rotation pour revenir vers la position initiale. Selon le véhicule, celle-ci peut être le long du capot, c'est à dire dans une position sensiblement horizontale par rapport à la surface vitrée, ou bien le long d'un montant latéral, c'est à dire dans une position sensiblement verticale par rapport à la surface vitrée.

Le long de son épure de balayage, le balai d'essuyage suit un mouvement de rotation au bout du bras d'entrainement entre la position arrêt fixe et la position opposée arrêt fixe afin d'évacuer l'eau et/ou des salissures présentes sur la surface vitrée et qui peuvent gêner la visibilité du conducteur du véhicule.

En fonction des conditions d'humidité de la surface vitrée, l'évacuation de l'eau n'est pas toujours optimale. En effet, en cas de pluie intense ou lors du nettoyage de la surface vitrée par exemple, l'excès d'eau sur la surface vitrée rend son évacuation par la seule installation d'essuyage insuffisante pour maintenir une vision parfaite du conducteur au travers de ladite surface vitrée. En outre, durant l'utilisation de l'installation d'essuyage, et lorsque le balai d'essuyage change de sens au voisinage d'un montant du pare-brise, le balai d'essuyage peut parfois ramener dans le champ de vision du conducteur - par aspiration - l'eau qui a été raclée, du fait d'une dépression locale créée par le flux d'air aérodynamique en arrière dudit balai d'essuyage. Ce phénomène d'aspiration de l'eau en excès sur le pare-brise introduit une gêne de la vision du conducteur. Ce phénomène d'aspiration est d'autant plus présent que l'eau, ou le liquide de nettoyage, a tendance à s'accumuler entre le montant latéral délimitant partiellement la surface vitrée et le balai d'essuyage lorsqu'il est au voisinage dudit montant latéral.

La présente invention a pour objet de répondre au moins en grande partie aux problèmes précédents et de conduire en outre à d'autres avantages en proposant un nouveau procédé de réduction du phénomène d'aspiration d'eau lors du nettoyage d'une surface vitrée pour résoudre au moins un de ces problèmes.

Un autre but de la présente invention est de proposer un nouveau système d'essuyage permettant de réduire le phénomène d'aspiration de l'eau.

Un autre but de la présente invention est d'améliorer le confort et la sécurité liés à l'utilisation d'un tel système d'essuyage sur un pare-brise de véhicule.

### Exposé de l'invention

Selon un premier aspect de l'invention, on atteint au moins l'un des objectifs précités avec un procédé de réduction de l'aspiration d'un liquide par un balai d'essuyage, ledit procédé étant mis en oeuvre par un système d'essuyage pour véhicule comprenant ledit balai d'essuyage configuré pour balayer une surface à essuyer dudit véhicule le long d'une épure de balayage, ledit procédé comprenant les étapes suivantes :
- durant une première partie de l'épure de balayage, projection d'un liquide circulant dans un canal du balai d'essuyage, ledit canal comprenant une pluralité d'ouvertures permettant de projeter le liquide hors dudit canal ;
- durant une deuxième partie de l'épure de balayage successive de la première partie de ladite épure de balayage, projection d'un flux d'air au travers du canal du balai d'essuyage par l'intermédiaire de la pluralité d'ouvertures.

Ainsi, le procédé conforme au premier aspect de l'invention permet, dans un premier temps, de projeter le liquide sur la surface à essuyer et, dans un deuxième temps, de projeter de l'air sur ladite surface à essuyer. Bien entendu, le procédé conforme au premier aspect de l'invention se répète périodiquement sur une pluralité d'épures de balayage. De manière avantageuse et originale, le liquide projeté durant le premier temps du procédé conforme au premier aspect de l'invention et l'air projeté durant le deuxième temps sont acheminés à l'intérieur du balai d'essuyage par un même canal qui s'étend longitudinalement le long dudit balai d'essuyage. Afin d'obtenir un effet sur toute la surface à essuyer, les ouvertures du balai d'essuyage sont réparties longitudinalement le long dudit balai d'essuyage, lesdites ouvertures étant préférentiellement régulièrement réparties les unes par rapport aux autres le long du balai d'essuyage. Ainsi, l'invention conforme à son premier aspect adresse un procédé au cours duquel un balai d'essuyage, par l'intermédiaire d'un même canal et des mêmes ouvertures, projette d'abord un liquide puis, successivement à la projection dudit liquide, projette de l'air sur la surface à essuyer. La projection du fluide est successive à la projection du liquide pour une épure de balayage.

Le liquide projeté est avantageusement de l'eau ou un liquide de lavage.

Grâce à l'invention, le phénomène d'aspiration de l'eau, lorsque le balai d'essuyage change de sens à l'atteinte de sa position le long du montant, est réduit car la projection d'air durant la deuxième partie de l'épure de balayage génère un flux d'air qui s'oppose au mouvement de l'eau aspirée par le mouvement rétrograde du balai d'essuyage ayant changé de direction. En d'autres termes, la projection de l'air sur la surface à essuyer tend à repousser l'eau présente sur ladite surface à essuyer en direction de l'un des bords de la surface à essuyer, réduisant ainsi le phénomène d'aspiration de l'eau qui tend à aspirer l'eau présente sur la surface à essuyer en direction d'une partie médiane de ladite surface à essuyer.

Le procédé conforme au premier aspect de l'invention comprend avantageusement au moins un des perfectionnements ci-dessous, les caractéristiques techniques formant ces perfectionnements pouvant être prises seules ou en combinaison :
- le procédé conforme au premier aspect de l'invention comprend une étape de détermination d'une position angulaire du balai d'essuyage, et si la position angulaire déterminée est comprise dans la première partie de l'épure de balayage, le procédé conforme au premier aspect de l'invention comprend une étape de circulation d'un liquide dans le canal du balai d'essuyage, ou si la position angulaire déterminée est comprise dans la deuxième partie de l'épure de balayage, le procédé conforme au premier aspect de l'invention comprend une étape de circulation d'un flux d'air dans le canal du balai d'essuyage. En d'autres termes, il existe une position angulaire limite à partir de laquelle le procédé conforme au premier aspect de l'invention projette du liquide ou de l'air au travers du canal et des ouvertures du balai d'essuyage. De manière avantageuse, la position angulaire limite est comprise entre 1° et 20° d'une position du balai d'essuyage la plus proche du montant de la surface à essuyer ;
- si la position angulaire déterminée est comprise dans la première partie de l'épure de balayage, le procédé comprend une étape d'activation d'un dispositif d'alimentation en liquide du balai d'essuyage. Cette configuration permet avantageusement d'injecter le liquide dans le canal du balai d'essuyage, en contrôlant par exemple une pression dudit liquide injecté dans ledit canal ;
- si la position angulaire déterminée est comprise dans la deuxième partie de l'épure de balayage, le procédé comprend une étape d'activation d'un dispositif générateur de flux d'air dans le balai d'essuyage. Cette configuration permet avantageusement d'injecter l'air dans le canal du balai d'essuyage, en contrôlant par exemple une pression de l'air injecté dans ledit canal ;
- le procédé conforme au premier aspect de l'invention comprend, successivement à l'étape de détermination de la position angulaire du balai d'essuyage, une étape de commutation entre la circulation du liquide et la circulation du flux d'air dans le canal du balai d'essuyage lorsque ledit balai d'essuyage passe de la première partie de l'épure de balayage à la deuxième partie de ladite épure de balayage. Cette configuration est particulièrement avantageuse durant une phase « ascendante » du balai d'essuyage le long de l'épure de balayage, c'est-à-dire depuis une position le long d'un capot du véhicule vers sa position le long du montant de la surface vitrée. Durant une phase « descendante » du balai d'essuyage le long de l'épure de balayage, c'est-à-dire depuis sa position le long du montant de la surface vitrée vers sa position le long du capot, le procédé conforme au premier aspect de l'invention comprend, successivement à l'étape de détermination de la position angulaire du balai d'essuyage, une étape de commutation entre la circulation du flux d'air et la circulation du liquide dans le canal du balai d'essuyage lorsque ledit balai d'essuyage passe de la deuxième partie de l'épure de balayage à la première partie de ladite épure de balayage ;
- la circulation du liquide dans le canal du balai d'essuyage est interrompue préalablement au passage dudit balai d'essuyage entre la première partie de l'épure de balayage à la deuxième partie de ladite épure de balayage. Cette configuration est particulièrement avantageuse durant une phase « ascendante » du balai d'essuyage le long de l'épure de balayage, c'est-à-dire depuis sa position le long du capot vers sa position le long du montant de la surface vitrée. Durant une phase « descendante » du balai d'essuyage le long de l'épure de balayage, c'est-à-dire depuis sa position le long du montant de la surface vitrée vers sa position le long du capot, la circulation du flux d'air dans le canal du balai d'essuyage est interrompue préalablement au passage dudit balai d'essuyage entre la deuxième partie de l'épure de balayage à la première partie de ladite épure de balayage.

Selon un deuxième aspect de l'invention, il est proposé un système d'essuyage pour véhicule, le système d'essuyage comprenant des moyens configurés pour mettre en oeuvre toutes les étapes du procédé tel qu'exposé ci-dessus.

Ainsi le système d'essuyage conforme au deuxième aspect de l'invention permet de réduire le phénomène d'aspiration d'eau sur la surface à essuyer et, consécutivement, permet d'améliorer le confort et la sécurité liés à l'utilisation d'un tel système d'essuyage sur un pare-brise de véhicule, ledit pare-brise formant ladite surface à essuyer.

Plus particulièrement, les moyens du système d'essuyage conforme au deuxième aspect de l'invention comprennent :
- au moins un balai d'essuyage et un bras d'entrainement du balai d'essuyage, le balai d'essuyage comprenant (i) au moins une lame d'essuyage configurée pour prendre appui sur une surface à essuyer, et (ii) un canal comportant une pluralité d'ouvertures mettant en relation un volume intérieur au canal avec un environnement extérieur au balai d'essuyage ;
- un dispositif d'alimentation en liquide en communication fluidique avec le canal du balai d'essuyage, de sorte à pouvoir projeter par la pluralité d'ouvertures le liquide sur la surface à essuyer ;
- un dispositif générateur d'un flux d'air en communication fluidique avec le canal du balai d'essuyage, de sorte à pouvoir projeter par la pluralité d'ouvertures le flux d'air sur la surface à essuyer.

Le système d'essuyage conforme au deuxième aspect de l'invention comprend avantageusement au moins un des perfectionnements ci-dessous, les caractéristiques techniques formant ces perfectionnements pouvant être prises seules ou en combinaison :
- les moyens comprennent un dispositif de commutation configuré pour alternativement alimenter le canal en liquide ou en flux d'air. À titre d'exemple non limitatif, le dispositif de commutation peut prendre par exemple la forme d'une vanne ou d'une électrovanne ;
- le dispositif d'alimentation en liquide comprend au moins un réservoir de liquide et une pompe qui est en communication fluidique avec le dispositif de commutation d'une part et avec le réservoir d'autre part ;
- le dispositif générateur de flux d'air comprend au moins un tube pour mettre en communication fluidique le dispositif générateur de flux d'air et le dispositif de commutation ;
- l'au moins un tube comprend au moins une bouche d'admission agencée pour capter un vent relatif au véhicule ;
- le dispositif générateur de flux d'air comprend au moins un organe de compression du flux d'air, ledit organe de compression étant en communication fluidique avec le dispositif de commutation ;
- les moyens du système d'essuyage comprennent une unité de contrôle configurée pour piloter au moins le dispositif de commutation et/ou le dispositif générateur de flux d'air et/ou le dispositif d'alimentation en liquide ;
- les moyens du système d'essuyage comprennent au moins un capteur angulaire configuré pour déterminer une position angulaire du balai d'essuyage et/ou un capteur de vitesse configuré pour déterminer une vitesse de déplacement du véhicule ;
- le balai d'essuyage comprend au moins un déflecteur d'air, le canal étant ménagé dans le déflecteur d'air ;
- le canal est ménagé à une extrémité latérale du déflecteur, du côté opposé à une aile dudit déflecteur par rapport à la lame d'essuyage du balai d'essuyage.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre un exemple de réalisation d'un balai d'essuyage d'un système d'essuyage conforme au premier aspect de l'invention ;
- la FIGURE 2 illustre une vue schématique d'un pare-brise de véhicule automobile équipé d'un tel système d'essuyage ;
- la FIGURE 3 illustre une vue en coupe transversale d'un balai d'essuyage d'un système d'essuyage conforme au premier aspect de l'invention ;
- la FIGURE 4 illustre une vue d'un système d'essuyage conforme au deuxième aspect de l'invention ;
- la FIGURE 5 illustre les différentes parties d'une épure de balayage mise en oeuvre par un procédé de réduction de l'aspiration d'eau conforme au premier aspect de l'invention ;
- la FIGURE 6 illustre les différentes étapes du procédé de réduction de l'aspiration d'eau conforme au premier aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

Dans la suite de la description qui suit et dans les revendications, on utilisera à titre non limitatif et afin d'en faciliter la compréhension, les termes :
- « supérieur » et « inférieur » selon une direction de la surface vitrée prise selon son bord le plus court. Dans les FIGURES qui suivent, le terme « supérieur » se réfère à une région située vers le haut ; et le terme « inférieur » se réfère à une région située vers le bas. Dans le cas où la surface vitrée est utilisée comme pare-brise d'un véhicule automobile, les termes « supérieur » et « inférieur » se réfèrent respectivement à une région située du côté d'un toit et à une région située du côté d'un capot dudit véhicule automobile ;
- « latéral » selon une direction de la surface vitrée prise selon son bord le plus long, un premier bord latéral étant situé d'un premier côté dudit bord le plus long, et un deuxième bord latéral étant situé d'un deuxième côté opposé audit premier côté du bord le plus long. Dans les FIGURES qui suivent, les bords latéraux sont situés à droite et à gauche et ils peuvent également être qualifiés de montant de la surface à essuyer. Dans le cas où la surface vitrée est utilisée comme pare-brise d'un véhicule automobile, le terme latéral se réfère à la direction latérale dudit véhicule automobile, entre ses deux ailes ;
- « longitudinal » selon une direction propre à l'objet auquel il est rattaché, par exemple le balai d'essuyage, ladite direction longitudinale étant prise selon la plus longue dimension dudit objet, le terme « transversal » se rapportant à une direction perpendiculaire à la direction longitudinale.

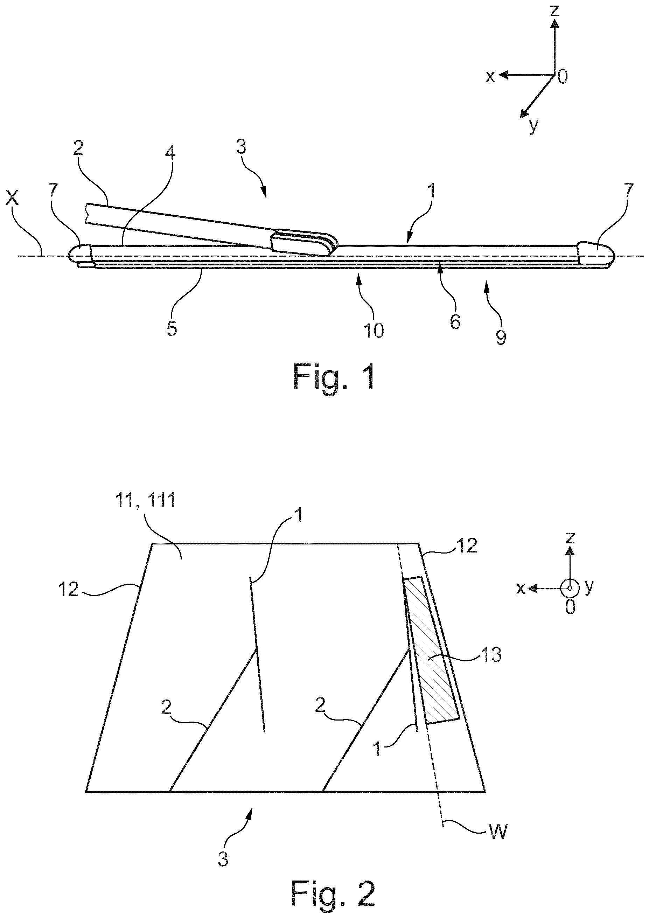

La FIGURE 1 illustre un exemple de réalisation d'un système d'essuyage 3 configuré pour être installé sur un véhicule automobile et permettant d'évacuer une eau et/ou des salissures, par exemple grâce à un liquide lave-glace, présentes sur une surface à essuyer, prenant la forme d'une surface vitrée, telle que par exemple un pare-brise dudit véhicule automobile. Le système d'essuyage 3 comprend un balai d'essuyage 1 monté au bout d'un bras d'entraînement 2 configuré pour effectuer un mouvement de rotation en va-et-vient le long et au-dessus de la surface d'essuyage.

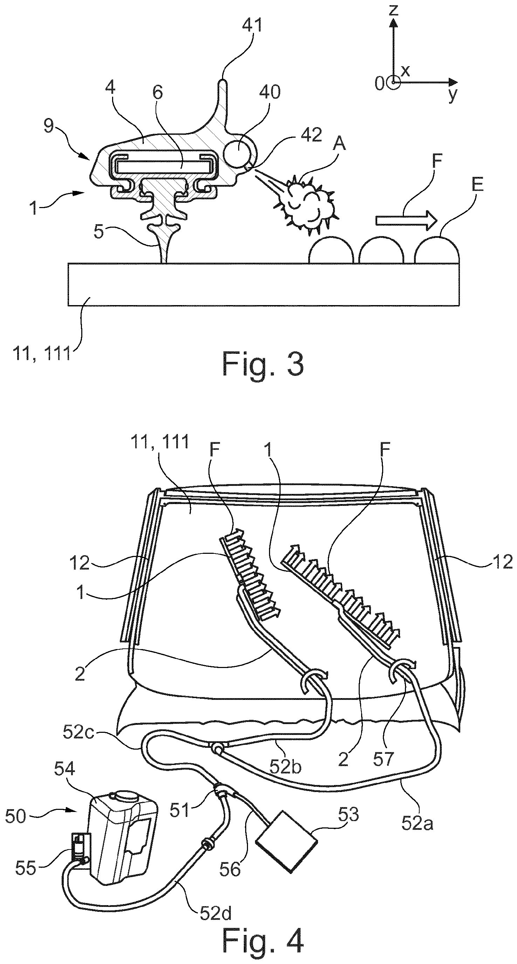

En référence aux FIGURES 1 et 3, le balai d'essuyage 1 s'étend selon un axe longitudinal X parallèle à l'axe Ox. Le balai d'essuyage 1 comprend un déflecteur d'air 4, une lame d'essuyage 5, un organe de flexion 6, également appelé vertèbre, et deux embouts d'extrémités 7 respectivement agencés à chacune des extrémités longitudinales du balai d'essuyage 1. L'organe de flexion 6 prend la forme d'une unique bande, ou de plusieurs bandes, d'extension longitudinale parallèle à l'axe Ox.

La lame d'essuyage 5 est en contact direct avec la surface à essuyer 111 afin d'évacuer l'eau et/ou les salissures présentes sur ladite surface à essuyer 111. Le déflecteur d'air 4, la lame d'essuyage 5 et l'organe de flexion 6 forment collectivement un ensemble semi-rigide 9 qui est porté par un dispositif de connexion 10, interposé entre le bras d'entraînement 2 et ledit ensemble semi-rigide 9. Le dispositif de connexion 10 assure une liaison mécanique entre une partie terminale du bras d'entraînement 2 et le balai d'essuyage 1. Le dispositif de connexion 10 permet de fixer solidairement et de manière détachable le balai d'essuyage 1 du bras d'entraînement 2, en vue d'un éventuel remplacement du balai d'essuyage 1.

Le déflecteur d'air 4 est quant à lui prévu pour transformer une pression appliquée par un flux d'air principal circulant le long de la surface à essuyer 111 du véhicule automobile en une force d'appui du balai d'essuyage 1 contre ladite surface à essuyer 111. Le déflecteur d'air 4 s'étend principalement parallèlement à l'axe longitudinal X du balai d'essuyage 1.

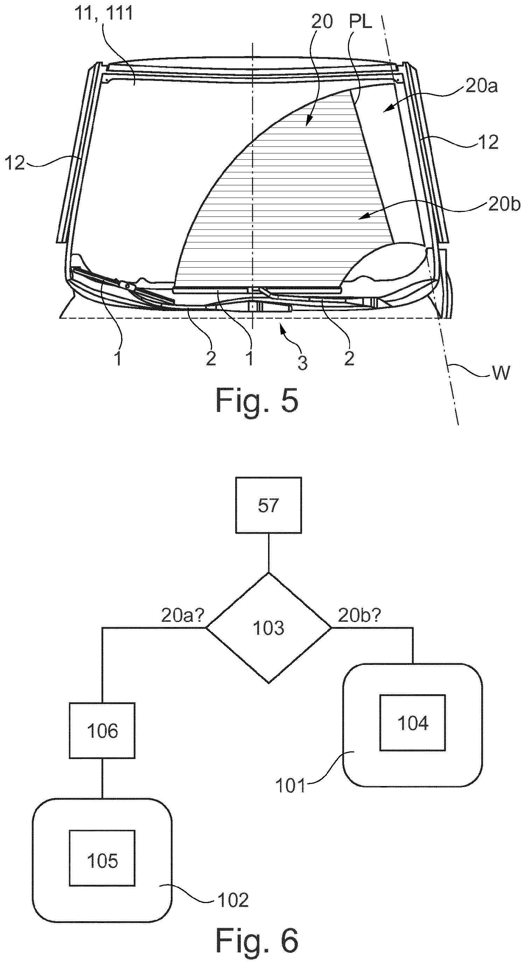

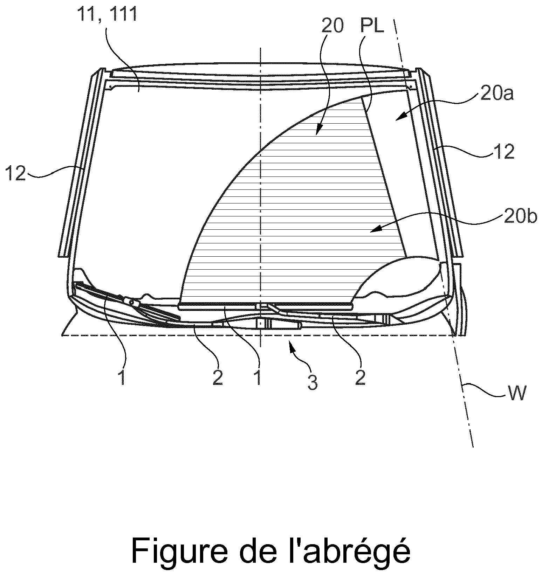

Tel que représenté sur la FIGURE 3, le balai d'essuyage 1 comprend un canal 40 qui s'étend longitudinalement selon l'axe longitudinal X. Le canal 40 est configuré pour permettre une circulation fluidique à l'intérieur du balai d'essuyage 1. Le canal 40 permet ainsi à un liquide ou à de l'air de circuler à l'intérieur le long de l'axe longitudinal X du balai d'essuyage 1, notamment selon le procédé conforme au premier aspect de l'invention et qui sera décrit ultérieurement en référence aux FIGURES 5 et 6.

Dans l'exemple illustré sur la FIGURE 3, le canal 40 a préférentiellement une section transverse de forme circulaire. La forme et/ou les dimensions du canal 40 sont avantageusement constantes le long de son extension longitudinale suivant l'axe longitudinal X du balai d'essuyage 1. De manière avantageuse, le canal 40 est formé dans le déflecteur 4 du balai d'essuyage 1. De manière avantageuse, le canal 40 se situe au niveau d'une extrémité latérale du déflecteur 4 située à proximité d'une aile 41 dudit déflecteur 4. Le canal 40 se trouve avantageusement du même côté que l'aile 41 du déflecteur par rapport à un plan de symétrie qui passe, d'une part par une zone de contact entre la lame d'essuyage 5 et la surface à essuyer 111, et d'autre part par un talon de la lame en le partageant en deux portions latérales identiques.

Le canal 40 s'étend longitudinalement parallèlement à l'axe longitudinal X du balai d'essuyage 1 et/ou du déflecteur 4. Comme visible sur la FIGURE 3, le canal 4 comprend aussi une pluralité d'ouvertures 42 afin de permettre au liquide ou à l'air circulant dans le canal 40 d'être propulsé vers l'extérieur, en direction de la surface à essuyer 111. Dans un plan perpendiculaire à l'axe longitudinal X d'extension du canal 40 du balai d'essuyage 1, les ouvertures 42 sont situées au niveau d'un bord du canal 40 situés à l'opposé de l'aile 41 du déflecteur 4 par rapport à un centre de ce canal 40.

Les ouvertures 42 sont configurées pour être traversées par le flux d'air A circulant dans le canal 40 du balai d'essuyage 1 ou par le liquide circulant dans ledit canal 40 afin de quitter ledit canal 40 et de rejoindre l'extérieur dudit canal 40 et d'être projeté sur la surface à essuyer 111. Avantageusement, comme visible sur la FIGURE 3, les ouvertures 42 sont orientées en direction de la surface à essuyer 111. Plus particulièrement, chaque ouverture 42 s'étend le long d'un angle avec un axe transversale Oy du balai d'essuyage 1, ledit axe transversale Oy étant parallèle à la surface à essuyer 111. L'angle est avantageusement compris entre 5° et 85°, et préférentiellement compris entre 35° et 55° afin d'optimiser un reflux F d'eau E sur la surface à essuyer 111.

En référence à la FIGURE 1, le bras d'entrainement 2 du balai d'essuyage 1 est motorisé et permet de générer un mouvement de rotation en va-et-vient dudit balai d'essuyage 1. Le balai d'essuyage 1 se déplace alors entre :
- une position le long du capot, dans laquelle ledit balai d'essuyage 1 est dans une position sensiblement horizontale, c'est-à-dire sensiblement parallèle au plan Oxy ; et
- une position le long du montant, dans laquelle il est dans une position sensiblement verticale, c'est-à-dire sensiblement parallèle au plan Oyz, ou sensiblement parallèle à un bord latéral ou montant 12 de la surface à essuyer 111, comme visible sur la FIGURE 2. En d'autres termes, la position le long du montant correspond à une position dans laquelle le balai d'essuyage 1 est sensiblement aligné avec un montant porteur d'un pare-brise 11 du véhicule automobile.

Le cycle de balayage de la surface à essuyer 111 est une succession de « phase ascendante » et de « phase descendante » du balai d'essuyage le long de la surface à essuyer 111.

Selon un exemple, la position le long du capot du véhicule peut être une phase initiale et terminale du cycle d'essuyage, autrement appelées « arrêt fixe ». Il s'agit du point de départ du cycle, à partir duquel le balai d'essuyage 1 débute son épure de balayage. Bien entendu, cette position du balai d'essuyage 1 le long du capot est aussi une position d'inversion de sens de rotation du balai d'essuyage 1 pendant un cycle d'essuyage. Dans cette situation, la position le long du montant est une position de retournement du balai d'essuyage 1, autrement appelée « opposé arrêt fixe ». Il s'agit d'une position où le sens de rotation du balai d'essuyage 1 change.

Selon un autre exemple, la position le long du montant de la surface à essuyer 111 peut être une phase initiale et terminale du cycle d'essuyage, autrement appelées « arrêt fixe ». Il s'agit alors du point de départ du cycle, à partir duquel le balai d'essuyage 1 débute son épure de balayage. Bien entendu, cette position du balai d'essuyage 1 le long du montant est aussi une position d'inversion de sens de rotation du balai d'essuyage 1 pendant un cycle d'essuyage. Dans cette situation, la position le long du capot est une position de retournement du balai d'essuyage 1, autrement appelée « opposé arrêt fixe ». Il s'agit d'une position où le sens de rotation du balai d'essuyage 1 change.

Les inventions décrites dans le présent document s'appliquent à ces deux exemples, tant qu'il est nécessaire de repousser un liquide aspiré par le balai d'essuyage au voisinage du montant de la surface à essuyer.

Dans la suite de la description, le terme « phase ascendante » se réfère à l'exemple ci-dessus exposé dans laquelle le balai d'essuyage 1 passe de sa position le long du capot à sa position le long du montant ; le terme « phase descendante » se réfère à une situation dans laquelle le balai d'essuyage 1 passe de sa position le long du montant à sa position le long du capot. L'ensemble des trajectoires et des positions prises par le balai d'essuyage entre sa position le long du capot et sa position le long du montant forment une épure de balayage 20.

La FIGURE 2 illustre le pare-brise 11 d'un véhicule automobile sur lequel est posé le balai d'essuyage 1 décrit précédemment. Le pare-brise 11 du véhicule automobile forme ainsi la surface à essuyer 111 pour le balai d'essuyage 1. Le pare-brise 11 est délimité par deux bords latéraux 12 du véhicule, autrement appelés montant de la surface à essuyer.

Lors de la phase ascendante, le balai d'essuyage 1 racle le pare-brise 11 de sorte à amener l'eau et/ou le liquide lave-glace présents sur ce pare-brise 11 vers l'un des bords latéraux 12 du véhicule. Cette eau et/ou ce liquide lave-glace ont alors tendance à s'accumuler dans une zone 13 située entre le balai d'essuyage 1 dans sa position le long du montant et ce montant 12 du véhicule. Afin de faciliter la compréhension, la position le long du montant du balai d'essuyage 1 est représentée sur la FIGURE 2 par une ligne pointillée W. Lors de la phase descendante du balai d'essuyage 1 successive à la phase ascendante, un phénomène d'aspiration des liquides accumulés par le balai d'essuyage 1 peut se produire, ramenant alors ces liquides dans le champ de vision du conducteur. On considérera que le champ de vision du conducteur est la zone majoritaire du pare-brise 11, c'est-à-dire située entre la ligne pointillée W et le montant 12 illustré à gauche sur la FIGURE 2.

Tel que cela sera plus amplement détaillée ci-après en référence aux FIGURES 5 et 6, le flux d'air projeté par les ouvertures 42 du canal 40, successivement au liquide projeté par lesdites ouvertures 42 dudit canal 40 permet de limiter que le phénomène d'aspiration ne ramène du liquide sur la surface à essuyer 111 et/ou ne vienne gêner la visibilité du conducteur.

La FIGURE 4 illustre un exemple de réalisation de système d'essuyage 3 conforme au deuxième aspect de l'invention. Dans l'exemple illustré sur la FIGURE 4, un tel système d'essuyage 3 comprend :
- un dispositif d'alimentation 50 en liquide, ledit dispositif d'alimentation 50 étant en communication fluidique avec le canal 40 du balai d'essuyage 1, de sorte à pouvoir projeter par la pluralité d'ouvertures 42 le liquide sur la surface à essuyer 111. Plus particulièrement, le dispositif d'alimentation 50 en liquide est relié au canal 40 par l'intermédiaire d'une pluralité de tubes 52a, 52b, 52c, 52d qui permettent de transporter le liquide entre ledit dispositif d'alimentation 50 et le ou les balais d'essuyage 1 ;
- un dispositif générateur d'un flux d'air 53 en communication fluidique avec le canal 40 du balai d'essuyage 1, de sorte à pouvoir projeter par la pluralité d'ouvertures 42 le flux d'air sur la surface à essuyer 111. Plus particulièrement, le dispositif générateur de flux d'air 53 est relié au canal 40 par l'intermédiaire de la pluralité de tubes 52a, 52b, 52c, 56 qui permettent de transporter le flux d'air entre ledit dispositif générateur de flux d'air 53 et le ou les balais d'essuyage 1. Ainsi, au moins une partie des tubes 52a, 52b, 52c, 52d, 56 sont configurés pour permettre une circulation de l'air ou de l'eau, préférentiellement de manière immédiatement successive.

En outre, dans l'exemple illustré sur la FIGURE 4, le dispositif d'alimentation en liquide 50 comprend un réservoir 54 de liquide et une pompe 55 qui est en communication fluidique avec le balai d'essuyage 1 d'une part et avec le réservoir 54 d'autre part, afin de pouvoir contrôler le débit et/ou une pression du liquide circulant dans les tubes 52a-52d et dans le canal 40 du balai d'essuyage 1.

Afin de pouvoir alimenter alternativement et sélectivement le canal 40 du balai d'essuyage 1 en liquide ou en flux d'air via respectivement le dispositif d'alimentation en liquide 50 et via le dispositif générateur de flux d'air 53, le système d'essuyage 3 comprend aussi un dispositif de commutation 51. À titre d'exemple non limitatif, le dispositif de commutation 51 peut prendre par exemple la forme d'une vanne ou d'une électrovanne.

Les tubes 52a, 52b, 52c situés entre le dispositif de commutation 51 et le balai d'essuyage 1 sont avantageusement configurés pour permettre à la fois une circulation de l'air et de l'eau.

Le dispositif générateur de flux d'air 53 comprend au moins un organe de compression du flux d'air, par exemple un compresseur.

Le système d'essuyage 3 comprend en outre au moins un capteur angulaire 57 configuré pour déterminer une position angulaire du balai d'essuyage 1 et/ou un capteur de vitesse configuré pour déterminer une vitesse de déplacement du véhicule. Le capteur angulaire 57 est par exemple du type d'un codeur angulaire implémenté au niveau du moteur du bras d'entrainement 2 du balai d'essuyage 1. Le capteur angulaire 57 peut également être intégré au moteur d'entraînement du bras d'entraînement 2.

Afin de piloter au moins le dispositif de commutation 51 et/ou le dispositif générateur de flux d'air 53 et/ou le dispositif d'alimentation en liquide 50, notamment la pompe 55 dudit dispositif d'alimentation en liquide 50, le système d'essuyage comprend une unité de contrôle - non représentée sur la FIGURE 4. L'unité de contrôle comprend avantageusement des moyens de calculs, tels que par exemple un microprocesseur ou un microcontrôleur. L'unité de contrôle reçoit une information du capteur angulaire 57 à partir de laquelle il est possible de savoir si le balai d'essuyage 1 est dans une première partie de l'épure de balayage 20 ou si le balai d'essuyage 1 est dans une deuxième partie de l'épure de balayage 20.

Le dispositif de commutation 51 et/ou le dispositif générateur de flux d'air 53 et/ou le dispositif d'alimentation en liquide 50 et/ou la pompe 55 dudit dispositif d'alimentation en liquide 50 et/ou l'unité de contrôle et/ou le capteur angulaire 57 sont avantageusement reliés à une source d'énergie électrique.

Ainsi, le système d'essuyage 3 conforme au deuxième aspect de l'invention et tel que décrit précédemment permet, au travers d'un même canal 40 à l'intérieur du balai d'essuyage 1, de faire circuler successivement le liquide puis l'air durant la phase ascendante de l'épure de balayage, ou l'air puis le liquide durant la phase descendante de ladite épure de balayage 20. Le système d'essuyage 3 est configuré pour pouvoir mettre en oeuvre un procédé 100 de réduction de l'aspiration d'eau par le balai d'essuyage 1, et tel qu'il va maintenant être décrit en référence aux FIGURES 5 et 6.

Le procédé 100 conforme au premier aspect de l'invention comprend :
- durant une première partie 20b de l'épure de balayage 20, une étape 101 de projection du liquide circulant dans le canal 40 du balai d'essuyage 1 par l'intermédiaire de la pluralité d'ouvertures 42 formées dans ledit canal 40, tel que décrit précédemment. Durant cette première étape 101, le liquide a la possibilité d'être projeté hors du canal 40 sur la surface à essuyer 111 par le dispositif d'alimentation en liquide 50 en communication fluidique avec le canal 40 du balai d'essuyage 1 ;
- durant une deuxième partie 20a de l'épure de balayage 20, successive de la première partie 20b de ladite épure de balayage 20 et différente de celle-ci, une étape 102 de projection du flux d'air circulant au travers du canal 40 du balai d'essuyage 1 par l'intermédiaire de la pluralité d'ouvertures 42. Durant cette deuxième étape 102, l'air est projeté hors du canal 40 sur la surface d'essuyage 111 par le dispositif générateur 53 du flux d'air en communication fluidique avec le canal 40 du balai d'essuyage 1.

Ainsi, au cours d'une épure de balayage 20 qui est répétée périodiquement, le procédé 100 conforme au premier aspect de l'invention permet, dans un premier temps, de projeter le liquide sur la première partie 20b de la surface à essuyer 111 et, dans un deuxième temps, de projeter de l'air sur la deuxième partie 20a de ladite surface à essuyer 111.

La première partie 20b de l'épure de balayage 20 est un premier secteur angulaire de déplacement du balai d'essuyage 1 borné par la position le long du capot du balai d'essuyage 1. La deuxième partie 20a de l'épure de balayage 20 est un second secteur angulaire de déplacement du balai d'essuyage 1 borné par la position le long du montant du balai d'essuyage 1.

La première partie 20b de l'épure de balayage 20 est compris entre 70° et 89°, un tel angle étant déterminé en prenant comme base un point de pivotement du bras d'entraînement 2 porteur du balai d'essuyage 1.

La deuxième partie 20a de l'épure de balayage 20 est compris entre 1° et 20°, un tel angle étant déterminé en prenant comme base un point de pivotement du bras d'entraînement 2 porteur du balai d'essuyage 1.

Le procédé 100 conforme au premier aspect de l'invention comprend avantageusement une étape 103 de détermination d'une position angulaire du balai d'essuyage 1. Cette étape 103 de détermination de la position angulaire reçoit une information par exemple du capteur angulaire 57 qui connaît la position du balai d'essuyage 1 dans l'épure de balayage 20, ainsi que le sens de circulation de ce balai d'essuyage, c'est-à-dire une phase ascendante ou une phase descendante du balai d'essuyage 1. Si la position angulaire déterminée est comprise dans la première partie 20b de l'épure de balayage 20, le procédé 100 est orienté vers l'étape 101 de circulation du liquide dans le canal 40 du balai d'essuyage 1. Lorsqu'il est déterminé que la position angulaire du balai d'essuyage 1 est comprise dans la première partie 20b de l'épure de balayage 20, le procédé 100 met en oeuvre une étape 104 d'activation du dispositif d'alimentation 50 en liquide du balai d'essuyage 1.

En revanche, si la position angulaire déterminée est comprise dans la deuxième partie 20a de l'épure de balayage 20, le procédé 100 est orienté vers l'étape 102 de circulation du flux d'air dans le canal 40 du balai d'essuyage 1. Si la position angulaire déterminée est comprise dans la deuxième partie 20a de l'épure de balayage 20, le procédé 100 met en oeuvre une étape 105 d'activation du dispositif générateur de flux d'air 53 dans le balai d'essuyage 1.

Il existe ainsi une position angulaire limite, référencée PL sur la FIGURE 5, à partir de laquelle le procédé 100 conforme au premier aspect de l'invention projette soit du liquide, soit de l'air au travers du canal 40 et des ouvertures 42 du balai d'essuyage 1 en fonction de la position dudit balai d'essuyage 1 par rapport à la première partie 20b ou respectivement de la deuxième partie 20a de l'épure de balayage 20. Lorsque le balai d'essuyage 1 entre dans la deuxième partie 20a de l'épure de balayage 20, le procédé opère l'envoi d'air dans le canal 4 et les ouvertures 42. Lorsque le balai d'essuyage 1 entre dans la première partie 20b de l'épure de balayage 20, le procédé peut opérer l'envoi de liquide dans le canal 4 et les ouvertures 42.

Le procédé 100 comprend, successivement à l'étape 103 de détermination de la position angulaire du balai d'essuyage 101, une étape 106 de commutation entre la circulation du liquide et la circulation du flux d'air dans le canal 40 du balai d'essuyage 1. Une telle commutation est opérée par le dispositif de commutation 51.

Afin d'optimiser la gestion du liquide circulant dans le canal 40 du balai d'essuyage 1 et d'en économiser la consommation, la circulation du liquide dans ledit canal 40 est avantageusement interrompue préalablement au passage dudit balai d'essuyage 1 au niveau de la position angulaire limite PL lorsque ledit balai d'essuyage parcourt la phase ascendante de l'épure de balayage 20. De manière avantageuse, la circulation du flux d'air dans le canal 40 du balai d'essuyage 1 est avantageusement interrompue préalablement au passage dudit balai d'essuyage 1 au niveau de la position angulaire limite PL lorsque le balai d'essuyage parcourt la phase descendante de l'épure de balayage 20.

En synthèse, l'invention concerne notamment un procédé 100 de réduction du phénomène d'aspiration d'eau sur une surface vitrée dans le sillage d'un balai d'essuyage 1 lorsqu'il change de direction au niveau de sa position le long du montant. À cet effet, le procédé 100 comprend une étape 102 de soufflage d'un flux d'air sur la surface vitrée, successivement à une étape 101 où peut être projeté un liquide sur ladite surface vitrée, ledit flux d'air et ledit liquide circulant dans un balai d'essuyage 1 à l'intérieur d'un même canal 40 et étant expulsé par de mêmes ouvertures 42 dudit canal 40. L'invention concerne aussi un système d'essuyage 3 comprenant un balai d'essuyage 1 configuré pour mettre en oeuvre un tel procédé 100.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé (100) de réduction de l'aspiration d'un liquide par un balai d'essuyage (1), ledit procédé (100) étant mis en oeuvre par un système d'essuyage (3) pour véhicule comprenant ledit balai d'essuyage (1) configuré pour balayer une surface à essuyer (111) dudit véhicule le long d'une épure de balayage (20), ledit procédé (100) comprenant les étapes suivantes :
- durant une première partie (20b) de l'épure de balayage (20), projection d'un liquide (101) circulant dans un canal (40) du balai d'essuyage (1), ledit canal (40) comprenant une pluralité d'ouvertures (42) permettant de projeter le liquide hors dudit canal (40) ;
- durant une deuxième partie (20a) de l'épure de balayage (20) successive de la première partie (20b) de ladite épure de balayage (20), projection d'un flux d'air (102) au travers du canal (40) du balai d'essuyage (1) par l'intermédiaire de la pluralité d'ouvertures (42).

2. Procédé (100) selon la revendication précédente, dans lequel le procédé (100) comprend :
- une étape (103) de détermination d'une position angulaire du balai d'essuyage (1) ; et
- si la position angulaire déterminée est comprise dans la première partie (20b) de l'épure de balayage (20), une étape (101) de circulation d'un liquide dans le canal (40) du balai d'essuyage (1) ; ou
- si la position angulaire déterminée est comprise dans la deuxième partie (20a) de l'épure de balayage (20), une étape (102) de circulation d'un flux d'air dans le canal (40) du balai d'essuyage (1).

3. Procédé (100) selon la revendication précédente, dans lequel, si la position angulaire déterminée est comprise dans la première partie (20b) de l'épure de balayage (20), le procédé (100) comprend une étape d'activation d'un dispositif d'alimentation en liquide du balai d'essuyage (1).

4. Procédé (100) selon l'une quelconque des revendications 2 ou 3, dans lequel, si la position angulaire déterminée est comprise dans la deuxième partie (20a) de l'épure de balayage (20), le procédé (100) comprend une étape d'activation d'un dispositif générateur de flux d'air dans le balai d'essuyage (1).

5. Procédé (100) selon l'une quelconque des revendications 2 à 4, dans lequel procédé (100) comprend, successivement à l'étape (103) de détermination de la position angulaire du balai d'essuyage (1), une étape de commutation (106) entre la circulation du liquide et la circulation du flux d'air dans le canal (40) du balai d'essuyage (1) lorsque ledit balai d'essuyage (1) passe de la première partie (20b) de l'épure de balayage (20) à la deuxième partie (20a) de ladite épure de balayage (20).

6. Système d'essuyage (3) pour véhicule, le système d'essuyage (3) comprenant des moyens configurés pour mettre en oeuvre toutes les étapes du procédé (100) selon l'une quelconque des revendications précédentes.

7. Système d'essuyage (3) selon la revendication précédente, dans lequel les moyens comprennent :
- au moins un balai d'essuyage (1) et un bras d'entrainement (2) du balai d'essuyage (1), le balai d'essuyage (1) comprenant :
∘ au moins une lame d'essuyage (5) configurée pour prendre appui sur une surface à essuyer (111) ;
∘ un canal (40) comportant une pluralité d'ouvertures (42) mettant en relation un volume intérieur au canal (40) avec un environnement extérieur au balai d'essuyage (1) ;
- un dispositif d'alimentation en liquide (50) en communication fluidique avec le canal (40) du balai d'essuyage (1), de sorte à pouvoir projeter par la pluralité d'ouvertures (42) le liquide sur la surface à essuyer (111) ;
**caractérisé en ce que** le système d'essuyage (3) comprend un dispositif générateur (53) d'un flux d'air en communication fluidique avec le canal (40) du balai d'essuyage (1), de sorte à pouvoir projeter par la pluralité d'ouvertures (42) le flux d'air sur la surface à essuyer (111).

8. Système d'essuyage (3) selon la revendication précédente, dans lequel les moyens comprennent un dispositif de commutation (51) configuré pour alternativement alimenter le canal (40) en liquide ou en flux d'air.

9. Système d'essuyage (3) selon la revendication précédente, dans lequel le dispositif d'alimentation en liquide (50) comprend au moins un réservoir (54) de liquide et une pompe (55) qui est en communication fluidique avec le dispositif de commutation (51) d'une part et avec le réservoir (54) d'autre part.

10. Système d'essuyage (3) selon l'une quelconque des revendications 8 ou 9, dans lequel le dispositif générateur (53) de flux d'air comprend au moins un organe de compression du flux d'air, ledit organe de compression étant en communication fluidique avec le dispositif de commutation (51).

11. Système d'essuyage (3) selon l'une quelconque des revendications 8 à 10, dans lequel le balai d'essuyage (1) comprend au moins un déflecteur d'air (4), le canal (40) étant ménagé dans le déflecteur d'air (4).

12. Système d'essuyage (3) selon la revendication précédente, dans lequel le canal (40) est ménagé à une extrémité latérale du déflecteur (4), du côté opposé à une aile (41) dudit déflecteur (4) par rapport à la lame d'essuyage (5) du balai d'essuyage (1).
